(19) Europäisches Patentamt
European Patent Office
Office européen des brevets

(11) Veröffentlichungsnummer : **0 073 435 B1**

(12) **EUROPÄISCHE PATENTSCHRIFT**

(45) Veröffentlichungstag der Patentschrift : **20.09.89**

(51) Int. Cl.$^4$ : **C 08 L 23/12**, C 08 K 5/00, C 08 J 3/24, C 08 F255/02

(21) Anmeldenummer : **82107644.5**

(22) Anmeldetag : **20.08.82**

(54) **Verfahren zur Vernetzung und gegebenenfalls Verschäumung von Polypropylen.**

(30) Priorität : **21.08.81 DE 3133183**

(43) Veröffentlichungstag der Anmeldung : **09.03.83 Patentblatt 83/10**

(45) Bekanntmachung des Hinweises auf die Patenterteilung : **20.09.89 Patentblatt 89/38**

(84) Benannte Vertragsstaaten : **AT BE DE FR GB IT NL SE**

(56) Entgegenhaltungen :
**DE-A- 1 907 926**
**DE-B- 1 291 508**
**FR-A- 1 578 661**
**FR-A- 2 263 276**
**FR-A- 2 432 033**
**DIE ANGEWANDTE MAKROMOLEKULARE CHEMIE, Band 69, Nr. 1035, 1978, Seiten 107-115, Basel, CH; I. CHODAK u.a.: "Crosslinking of polypropylene in the presence of polyfunctional monomers"**
**Die Akte enthält technische Angaben, die nach dem Eingang der Anmeldung eingereicht wurden und die nicht in dieser Patentschrift enthalten sind.**

(73) Patentinhaber : **Luperox GmbH**
**Denzinger Strasse 7**
**D-8870 Günzburg (DE)**

(72) Erfinder : **Rauer, Kurt, Dr.**
**Immelmannstrasse 8**
**D-8870 Günzburg (DE)**
Erfinder : **Adlassnig, Karl R., Dr.**
**Denzingen Am Hang 6**
**D-8870 Günzburg (DE)**
Erfinder : **Groepper, Jürgen**
**Denzingen Hinter den Gärten 12**
**D-8870 Günzburg (DE)**
Erfinder : **Hofmann, Harald**
**Rothenhofstrasse 11**
**D-8871 Ellzee/Stoffenried (DE)**

(74) Vertreter : **Abitz, Walter, Dr.-Ing. et al**
**Abitz, Morf, Gritschneder, Freiherr von Wittgenstein**
**Postfach 86 01 09**
**D-8000 München 86 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 073 435 B1**

Jouve, 18, rue St-Denis, 75001 Paris, France

**Beschreibung**

Die Erfindung betrifft ein Verfahren zur Vernetzung von Polypropylen und analogen Polymeren, wie Poly-(butylen(1)) oder Poly-(4-methylpenten(1)), mittels Vernetzungsverstärkern unter Mitwirkung sehr kleiner Mengen organischer Peroxide.

Es ist bekannt, daß sich Polypropylen und analog gebaute Polymere durch Peroxide nicht vernetzen lassen, da bei diesen Polymeren unter der Einwirkung von Peroxiden die Kettenspaltung die Kettenkombination stark überwiegt, woraus ein Abbau, also eine Molekulargewichtsverkleinerung, resultiert, wovon in der Technik zur Modifizierung (Degradierung) Gebrauch gemacht wird.

Unter bestimmten Bedingungen ist dennoch eine Vernetzung von Polypropylen und analog gebauten Polymeren möglich : Gemäß DE-AS 1 494 107 wird Polypropylen mittels Vernetzungsverstärker unter Mitwirkung von 1 bis 15 % Peroxid vernetzt. Gemäß DE-PS 2 839 733 (Firma Freudenberg) wird Polypropylen mittels 2 bis 20 % 1,2-Polybutadienöl unter der Einwirkung von energiereichen Strahlen oder 1 bis 2 % Peroxid vernetzt (und gegebenenfalls mittels Verschäumungsmittel verschäumt). Gemäß Europ.-OS 0 004 034 lassen sich Silane, z. B. γ-Methacryloyloxypropyl-trimethoxy-silan, auf Polypropylen aufpfropfen und das so erhaltene Pfropfcopolymer mittels heißem Wasser vernetzen. Gemäß japanischer Patentveröffentlichung 90 583/1977 wird Polypropylen lediglich mittels Vernetzungsverstärkern in Abwesenheit von Radikalbildnern, also in Abwesenheit von Peroxiden, vernetzt. Gemäß DE-AS 2 747 927 wird eine Mischung aus Polypropylen, anorganischem Füllstoff, 1 bis 20 % eines flüssigen Kautschuks, 0,2 bis 5 % einer ungesättigten Carbonsäure (z. B. 1 % Maleinsäureanhydrid) und 0,001 bis 10 % eines Radikalbildners (z. B. 0,022 % α,α'-Bis-(t-butylperoxy)-diisopropylbenzol) auf 110 °C bis 280 °C (z. B. auf 180 °C bis 210 °C), erhitzt. Das so erhaltene Produkt läßt sich zu Formkörpern mit ausgezeichneten Plattierungseigenschaften verarbeiten. Aus der DE-AS ist nicht zu erkennen, ob beim Erhitzen Vernetzung oder Abbau erfolgt. Mit großer Wahrscheinlichkeit erleidet das Polypropylen bei diesem Verfahren einen Abbau.

Gegenstand der Erfindung ist das in den Patentansprüchen beschriebene Verfahren.

Im Rahmen der Erfindung wurde ein Verfahren zur Vernetzung und gegebenenfalls Verschäumung von Polypropylen und analogen Polymeren wie Polybutylen(1) oder Poly-(4-methylpenten(1)) gefunden, die durch Peroxide allein infolge des Überwiegens der Abbaureaktion nicht vernetzbar sind. Erfindungsgemäß wird mit insgesamt 2 bis 15 Gew.-%, vorzugsweise 3 bis 15 Gew.-% oder 3 bis 9 bevorzugt 3 bis 5 Gew.-%, bezogen auf das Polymere, eines oder mehrerer Vernetzungsverstärker mit wenigstens 2, vorzugsweise wenigstens 3 aktiven (= polymerisierbaren) C-C-Doppel- oder C-C-Dreifachbindungen unter Mitwirkung sehr kleiner Mengen eines oder mehrerer organischer Peroxide im Bereich von insgesamt 0,02 bis 0,20 Gew.-%, vorzugsweise 0,04 bis 0,20 Gew.-% und 0,05 bis 0,15 Gew.-% bezogen auf das Polymere und gegebenenfalls in Anwesenheit von 1 bis 20 Gew.-% eines oder mehrerer Verschäumungsmittel bei Temperaturen von 160 °C bis 210 °C, vorzugsweise 180 °C bis 210 °C, in Ab- oder Anwesenheit von Füllstoffen, sowie in Ab- oder Anwesenheit von 0,01 bis 1 Gew.-%, vorzugsweise 0,1 bis 0,6 Gew.-% Antioxidantien unter vollständigem oder überwiegendem Ausschluß von Sauerstoff, unter Druck oder drucklos oder unter vermindertem Druck gearbeitet.

Die Summe von Peroxiden und Vernetzungsverstärkern liegt vorzugsweise bei mindestens 2,2 Gew.-%, besonders bevorzugt bei mindestens 3,08 Gew.-%. Bevorzugt werden etwa 0,08 Gew.-% Peroxide und etwa 3 Gew.-% Vernetzungsverstärker verwendet. Auf diese Weise lassen sich Vernetzungsgrade von 80 % bis 90 % erzielen, was angesichts der sehr kleinen Menge Peroxid überraschend ist. Ebenso überraschend ist die Tatsache, daß die Anwesenheit von Antioxidantien in Mengen, welche die sehr kleinen Mengen der Peroxide übertreffen, nicht störend wirkt und den erzielbaren Vernetzungsgrad nur unwesentlich erniedrigt. Von besonderem Vorteil sind allerdings spezielle Arten von Antioxidantien, nämlich solche, deren OH- und/oder NH-Gruppen wenigstens teilweise durch Silyl- oder Silylengruppen geschützt sind und deshalb während des Vernetzungsvorgangs keine Peroxyradikale verbrauchen oder auch solche Antioxidantien, die eine innermolekulare Kombination aus Vernetzungsverstärker und Antioxidans darstellen, die also im Molekül mindestens zwei aktive C-C-Doppel- oder C-C-Dreifachbindungen enthalten. Da Polypropylen bei erhöhten Temperaturen durch Sauerstoff in ähnlicher Weise abgebaut wird wie durch Peroxide muß für Abwesenheit von Sauerstoff gesorgt werden, wobei der Zutritt kleiner Mengen Sauerstoff, wie er beim Arbeiten unter Schutzgas z. B. Stickstoff oder Kohlendioxid erfolgt, tolerierbar ist.

Das erfindungsgemäße Vernetzungsverfahren hat folgende Vorteile :

a) Keine vom Peroxid ausgehende Geruchsbelästigung während des Vernetzens und keine vom Peroxid ausgehende Annahme des Geruchs durch das Polymere.

b) Die Vernetzung gelingt auch ohne oder unter nur geringem Druck blasenfrei.

c) Gute thermische und Alterungsbeständigkeit des Polymeren.

d) Verlängerung der Anvulkanisationszeit (= Scorchzeit) gegenüber solchen Verfahren, die normale bis große Mengen Peroxid einsetzen.

e) Gemäß erfindungsgemäßem Vernetzungsverfahren entsteht ein vernetztes Polymeres, dessen

Kettenmoleküle nicht direkt sondern über Brücken miteinander verbunden sind, die aus einem oder mehreren Vernetzungsverstärkermolekülen bestehen. Deshalb behält das vernetzte Produkt eine gewisse Flexibilität, die bei tieferen Temperaturen (unter 0 °C) von Bedeutung ist. Auf diese Weise wird das schon von Natur aus relativ spröde unvernetzte Polypropylen vor einer weiteren Versprödung nach der Vernetzung bewahrt. Andererseits haben die erfindungsgemäß vernetzten Produkte alle Vorteile, die Vernetzungen bewirken : Erhöhung der Chemikalienbeständigkeit, Verringerung der Spannungsrißkorrosion und Erhöhung der Füllstoffaufnahmefähigkeit.

f) Hohe Vernetzungsgrade.

Als Polymere kommen Polypropylen und dessen Analoge mit alternierenden tertiären Kohlenstoffatomen, wie Polybuten(1) oder Poly-(4-methylpenten(1)) in Betracht.

Als Vernetzungsverstärker sind Verbindungen mit wenigstens zwei, vorzugsweise wenigstens drei, aktiven (= polymerisierbaren) C-C-Doppel- oder C-C-Dreifachbindungen geeignet. Beispiele hierfür sind :

Allylverbindungen, beispielsweise Cyanurate (wie Triallylcyanurat, Triallylisocyanurat), Allylester drei- oder mehrwertiger Carbonsäuren (wie Triallyltrimellitat, Triallyltrimesinat, Tricarboxypropantriallylester, 3- oder mehrfach N-allylsubstituierte Säureamide oder Imide (wie N,N,N',N'-Tetraallyladipinsäurediamid), Allyläther auf der Basis drei- oder mehrwertiger Alkohole (wie Trimethylolpropantriallyläther), Allylester drei- oder mehrbasischer anorganischer Säuren (wie Triallylphosphat), « gemischte » Verbindungen mit drei- oder mehr aktiven C-C-Doppelbindungen (wei Diallylmaleinat).

Methallylverbindungen, die den oben genannten Allylverbindungen entsprechen, z. B. Trimethallylcyanurat.

Crotylverbindungen, die den oben genannten Tri- oder Polyallylverbindungen entsprechen, z. B. Tricrotylcyanurat.

Methacrylester, wie Trimethylolpropantrimethacrylat, Äthylenglykoldimethacrylat, Hexylenglykol(1,6)-dimethacrylat.

Acrylester, die den oben genannten Tri- oder Polymethacrylestern entsprechen, z. B. Trimethylolpropantriacrylat.

Verbindungen mit C-C-Dreifachbindungen, wie Tripropargyltrimellitat, oder die « gemischte » Verbindung Dipropargylmaleinimid.

Maleinimide, z. B. m-Phenylen-bis-maleinimid, 1,6-Bis-maleinimidohexan, Tris-(4-maleinimidophenyl)-methan, 2,4,4'-Tris-(maleinimido)-diphenylmethan), Tris-, Tetrakis- oder Pentakis-maleinimide der Formel I, in der n = 1 oder 2 oder 3.

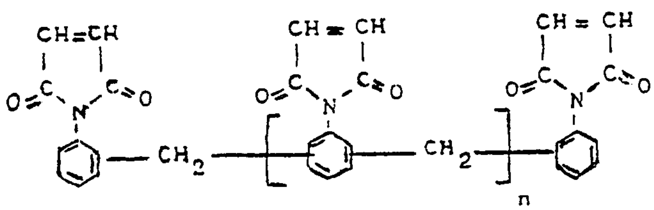

(I)

Als organische Peroxide, die in Mengen von 0,02 bis 0,20 %, vorzugsweise 0,05 bis 0,15 % eingesetzt werden, sind alle Peroxide mit Ausnahme von Hydroperoxiden, Persäuren und Ketonperoxiden geeignet, also beispielsweise Dialkylperoxide, Perketale, z. B. 1,1-Bis-t-butylperoxy-3,3,5-trimethylcyclohexan, gemischte Dialkylperoxidperketale, z. B. 3,3,6,6,9,9-Hexamethyl-1,2,4,5-tetraoxanonan, Perester, z. B. t-Butylperbenzoat, Monoperoxycarbonatester, z. B. O-Cyclohexyl-, O-2-Äthylhexyl- oder O-Myristyl-O,O-t-butylmonoperoxycarbonat, Diacylperoxide, z. B. 3,5,5-Trimethylhexanoylperoxid, Ätherperoxide, z. B. 2-t-Butylperoxy-2-butoxypropan, Ketonperoxidester, z. B. Bis-(2-äthylhexanoylperoxy)-butyl(2)-peroxid, t-Alkylperoxyketonperoxide, z. B. 3,5-Di-t-butylperoxy-3,5-dimethyl-1,2-dioxacyclopentan. Bevorzugt werden hochanspringende Vernetzungsperoxide, die der Gruppe der Dialkyperoxide angehören, beispielsweise Di-t-butylperoxid, Dicumylperoxid, t-Butylcumylperoxid, t-Butyl-m/p-methylcumylperoxid, α,α'-Bis-(t-butylperoxy)-1,4 (oder 1,3)-diisopropylbenzol, 2,5-Bis-(t-butyloxyperoxy)-2,5-dimethylhexan, 2,5-Bis-(t-butylperoxy)-2,5-dimethylhexin(3), 3-t-Butylperoxy-3-phenylphthalid.

Als Antioxidantien, die in Mengen von 0,05 bis 1,5 %, vorzugsweise 0,1 bis 0,6 % eingesetzt werden, sind alle üblichen zur Stabilisierung von Polymeren geeigneten Antioxidantien brauchbar, beispielsweise 2,6-Di-t-butyl-4-phenylphenol (= o,o'-Di-t-butyl-p-kresol), 2,2'-Methylen-bis-(6-t-butyl-4-methylphenol), Hydrochinon, N-Isopropyl-N'-phenyl-p-phenylendiamin, 4,4'-Thio-bis-(2-methyl-6-t-butylphenol), 3,3'-Thiodipropionsäure oder deren Alkylester, Trialkyl-(aryl)-phosphite. Besonders vorteilhaft sind jedoch Antioxidantien, deren OH- und/oder NH-Gruppen ganz oder teilweise durch Silyl- oder Silylengruppen geschützt sind und deshalb während des Vernetzungsvorgangs keine Radikale verbrauchen ; derartige Antioxidantien werden in der DE-OS 2 823 820 (z. B. Antioxidans II) oder in der DE-OS 2 823 846 (z. B. Antioxidans III) beschrieben.

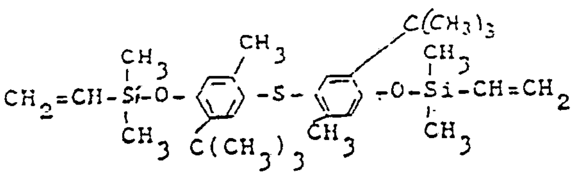

(II)

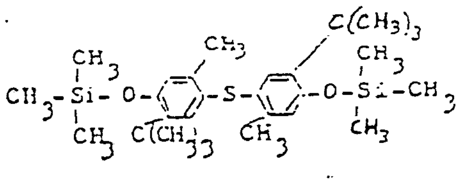

(III)

Ebenfalls vorteilhaft sind Antioxidantien, die eine innermolekulare Kombination aus Vernetzungsverstärker und Antioxidans darstellen, die also im Molekül mindestens zwei aktive C-C-Doppel- oder C-C-Dreifachbindungen enthalten, wie sie beispielsweise in der DE-OS 2 506 105 (Siemens AG) beschrieben werden, z. B. das 2-(p-Phenylaminoanilino)-4,6-diallyloxy-s-triazin (IV).

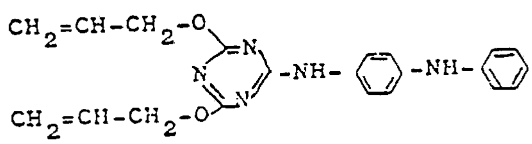

(IV)

Als chemische Verschäumungsmittel, die in Mengen von 1 bis 20 % eingesetzt werden können, eignen sich die bekannten Schäummittel, wie Azodicarbonamid, Sulfonylhydrazide (z. B. Benzoldisulfonylhydrazid), Sulfonylsemicarbazide (z. B. Toluolsulfonylsemicarbazid), wobei es wesentlich ist, daß das verwendete Schäummittel eine Zersetzungstemperatur hat, die mindestens gleich hoch, besser aber höher, vorzugsweise etwa 20 °C höher liegt als die Zersetzungstemperatur des Peroxids.

Die Vernetzung gemäß vorliegender Erfindung kann auch in Gegenwart von Füllstoffen wie Ruß, Calciumcarbonat, Talkum, Calciumsilikat, Aluminiumsilikat, bzw. Kaolin, Kieselsäure, bzw. $SiO_2$, Glasfasern, Pigmenten oder anderen Zusatzstoffen, wie Flammschutzmitteln, antistatischen Mitteln, Gleitmitteln, Weichmachern, aber auch in Gegenwart von vernetzbaren oder nicht vernetzbaren Polymeren, Copolymeren, Blockpolymeren, beispielsweise in Form von 1 bis 4 %, eines 1,2- oder 1,4-Polybutadienöls oder eines flüssigen niedermolekularen Polyäthylens, die als Plastifikatoren dienen können, und dergleichen erfolgen.

In einer besonderen Ausführungsform der Erfindung wird das zu vernetzende Formstück in einen Autoklaven (z. B. Polypropylenrohre in einen langgestreckten Autoklaven) gebracht, in dem sich Wasser, ein oder mehrere Emulgatoren, ein oder mehrere Vernetzungsverstärker und ein oder mehrere Peroxide mit ähnlichen oder auch weit auseinanderliegenden Halbwertszeiten befinden. Die Luft wird durch Stickstoff verdrängt. Das Wasser und die eben genannten Zutaten werden durch Rühren oder Umpumpen bewegt, wobei der Inhalt des Autoklaven auf die gewünschte Vernetzungstemperaturen aufgeheizt und längere Zeit auf diesen Temperaturen gehalten wird. Vernetzungsverstärker und Peroxid haben dabei Gelegenheit in das zu vernetzende Polymere einzudiffundieren und dort ihr Vernetzungswerk zu verrichten.

In einer weiteren bevorzugten Ausführungsform der Erfindung wird Polypropylen oder ein analoges Polymeres (als Pulver oder Granulat), das Vernetzungsverstärker, Peroxid, gegebenenfalls Antioxidans, Plastifikator und Verschäumungsmittel enthält (entweder « innerlich » eingearbeitet oder « äußerlich » adsorbtiv) dem Einfülltrichter eines Schneckenextruders zugeführt, aus dem durch Begasung mit Stickstoff die Luft verdrängt wurde. Durch Extrusion über der Erweichungstemperatur der Mischung (bei etwa 160 °C bis 180 °C), aber unter der Scorch-Temperatur, werden Rohre, Kabel, fortlaufende Bahnen, Fäden usw. geformt, die anschließend bei Temperaturen von etwa 180 °C bis 230 °C vernetzt, gegebenenfalls verschäumt werden. Auch unter drucklosen Bedingungen erhält man dabei blasenfreie vernetzte Produkte.

Die zur Vernetzung erforderliche Energiezufuhr kann

a) durch direkten Kontakt des zu vernetzenden Polymeren mit einem vorgeheizten Material, z. B. Stahl, geschmolzenes Metall, geschmolzenes Salz, Wasser, Luft, Stickstoff,

b) durch elektromagnetische Strahlung, z. B. IR, UHF (= Mikrowellen, Röntgen- Gamma-Strahlen), oder

c) durch Korpuskularstrahlen, z. B. Alpha-Strahlen oder Beta-Strahlen (= Elektronenstrahlen),

erfolgen. Dabei ist zu beachten, daß bestimmte Arten der Energie, z. B. Gamma- oder Betastrahlen auch in Abwesenheit von Peroxiden Vernetzung bewirken; die Anwesenheit der Peroxide verbessert jedoch den Vernetzungsgrad, sie ist jedenfalls zur Durchführung des beanspruchten Verfahrens erforderlich.

Die Erfindung wird durch die nachstehenden Beispiele erläutert. In den Beispielen beziehen sich die Prozentangaben zugesetzter Bestandteile auf das Polymergewicht.

## Beispiele

Die Vernetzung der Polymeren erfolgt unter Sauerstoffausschluß in Stickstoffatmosphäre. Vernetzungsverstärker, Peroxid und gegebenenfalls andere Zusatzstoffe wurden in das Polymere, wenn es eine pulvrige Beschaffenheit hat durch Verrühren in einem Becherglas, eingearbeitet. Die Vernetzung wird in einem Trockenschrank vorgenommen, der auf die gewünschte Vernetzungstemperatur vorgeheizt worden war. Zum Aufheizen auf die Vernetzungstemperatur werden 9 bis 12 Minuten benötigt ; um diese Zeit verbleibt die Ampulle länger im Trockenschrank, als in den Tabellen als Vernetzungszeit angegeben ist.

Zur Bestimmung des Vernetzungsgrades wird das vernetzte Polymere in Streifen geschnitten und in ein vorher gewogenes Drahtnetz aus Edelstahl locker eingepackt. Anschließend wird das im Netz befindliche Polymere 1 Stunde mit siedendem Xylol (80 ml auf 1 g Polymer) unter Rückfluß extrahiert. Nach der Vernetzung werden Netz und Inhalt zum Abspülen in warmes Xylol getaucht und danach zur restlosen Entfernung des Xylols im Trockenschrank 1 Stunde auf 160 °C erhitzt. Zur Ermittlung des Gewichtsverlustes wird nach dem Abkühlen abermals gewogen. Die Menge des im Netz verbliebenen unlöslichen Anteils (= Gelanteil) des vernetzten Polymeren, multipliziert mit hundert und dividiert durch die ursprüngliche Menge an Polymeren, gibt den Vernetzungsgrad. Ein unvernetztes Polymeres wird unter den eben beschriebenen Bedingungen vollständig aufgelöst. Ein Polymeres, in dem jede Polymerkette wenigstens eine Vernetzungsbrücke mit der anderen bildet, bleibt in siedendem Xylol vollständig unlöslich.

Beispiel 1

Polypropylen-Pulver mit einem Schmelzindex von 0,6 g/10 min bei 230 °C und 2,16 kp Belastung wurde mittels Trimethylolpropantrimethacrylat (= TRIM) bzw. Triallylcyanurat (= TAC) als Vernetzungsverstärker unter Mitwirkung sehr kleiner Mengen von 2,5-Bis-(t-butylperoxy) — 2;5-dimethylhexan (= Lup.101) für 90 Minuten bzw. 40 Minuten bei 160 °C bzw. 185 °C bzw. 200 °C unter Stickstoff vernetzt :

| Vernetzungsverstärker und/oder Peroxid | Vernetzungsgrade nach 90 min bei 160 °C | 40 min bei 185 °C | 40 min bei 200 °C |
|---|---|---|---|
| a) ohne Zusätze | 0,2 % | 0,5 % | 0,5 % |
| b) 5 % TRIM | 0,1 % | 0,5 % | 0,6 % |
| c) 5 % TAC | - | 0,1 % | 0,3 % |
| d) 0,05 % Lup.101 | 0,2 % | 0,1 % | 0,1 % |
| ----- | | | |
| e) 5 % TRIM + 0,05 % Lup.101 | 44 % | 64 % | 81 % |
| f) 5 % TAC + 0,05 % Lup.101 | - | 63 % | 82 % |

Beispiel 2

Polypropylen-Grieß (D. = 0,908 ; Schmp. = 157-162 °C ; Schmelzindex = kleiner als 0,1 g/10 min bei 230 °C und 2,16 kp Belastung) wurde mittels TRIM oder TAC als Vernetzungsverstärker allein oder unter Mitwirkung sehr kleiner Mengen von Lup.101 für 90 Minuten bei 160 °C bzw. 40 Minuten bei 200 °C unter Stickstoff vernetzt.

Dieses Beispiel zeigt, daß gewisse Polypropylentypen (wie der hier verwendete Polypropylen-Grieß) durch Vernetzungsverstärker alleine, also in Abwesenheit von Radikalbildnern (Peroxiden) zwar vernetzt werden gemäß japanischer Patentveröffentlichung 90 583/1977, es zeigt aber gleichzeitig, daß das erfindungsgemäße Vernetzungssystem unter den gleichen Bedingungen mit der gleichen Menge Vernetzungsverstärker deutlich höhere Vernetzungsgrade liefert wie ein Vergleich von c) 69 % bei 200 °C mit f) 85 % bei 200 °C oder d) 18 % bei 200 °C, mit g) 90 % bei 200 °C zu erkennen gibt.

| Vernetzungsverstärker und/oder Peroxid | Vernetzungsgrade nach 90 min bei 160 °C | | 40 min bei 200 °C |
|---|---|---|---|
| a) ohne Zusätze, 10 min auf 200 °C erwärmt | - | 0,1 % | - |
| b) ohne Zusätze | 60 % (54 % unter $CO_2$) | | 12 % |

Tabelle (Fortsetzung)

| Vernetzungsverstärker und/oder Peroxid | Vernetzungsgrade nach 90 min bei 160 °C | 40 min bei 200 °C |
|---|---|---|
| c) 5 % TRIM | 57 % | 69 % |
| d) 5 % TAC | - | 18 % |
| e) 0,05 % Lup.101 | 0,2 % | 4 % |
| ------ | | |
| f) 5 % TRIM + 0,05 % Lup.101 | 70 % | 85 % |
| g) 5 % TAC + 0,05 % Lup.101 | - | 90 % |

Beispiel 3

Polypropylen-Pulver mit einem Schmelzindex von 0,6 g/10 min bei 230 °C und 2,16 kp Belastung wurde mittels einer Reihe von Vernetzungsverstärkern unter Mitwirkung sehr kleiner Mengen 2,5-Bis-(t-butylperoxy)-2,5-dimethylhexan (= Lup.101) für 40 Minuten bei 200 °C in An- oder Abwesenheit von Antioxidantien unter Stickstoff vernetzt.

Dieses Beispiel zeigt,

a) daß Vernetzungsverstärker mit nur einer aktiven C-C-Doppelbindung (Maleinsäure) unter den vorliegenden Bedingungen keine Vernetzung bewirken,

b) daß Antioxidantien (o,o'-Di-t-butyl-p-kresol = TBK oder 2-(p-Phenylamino-anilino)-4,6-diallyloxy-s-triazin) = PADAT die Vernetzung nur unwesentlich oder praktisch gar nicht beeinträchtigen :

| | Vernetzungsverstärker, Peroxid, Antioxidans | Vernetzungsgrade (%) |
|---|---|---|
| 1) | ohne Zusätze | 0,2 |
| 2) | 5 % Triallylcyanurat (= TAC) | 0,1 |
| 3) | 5 % Triallyltrimellitat | 0,1 |
| 4) | 5 % Maleinsäure | 0,1 |
| | ---- | |
| 5) | 0,05 % 2,5-Bis-(t-butylperoxy)-2,5-dimethylhexan (= Lup.101) | 0,1 |
| | 0,1 % -"- | 0,1 |
| | ---- | |
| 6) | 5 % TAC + 0,05 % Lup.101 | 77 |
| 7) | 5 % TAC + 0,1 % Lup.101 | 87 |
| 8) | 5 % Triallyltrimellitat + 0,05 % Lup.101 | 87 |
| 9) | 5 % Triallyltrimellitat + 0,1 % Lup.101 | 88 |
| 10) | 5 % Maleinsäure + 0,05 % Lup.101 | 0,1 |
| 11) | 5 % TAC + 0,05 % Lup.101 + 0,01 % TBK-Antioxidans | 90 |
| 12) | 5 % TAC + 0,05 % Lup.101 + 0,1 % TBK-Antioxidans | 86 |
| 13) | 5 % TAC + 0,05 % Lup.101 + 0,3 % TBK-Antioxidans | 70 |
| 14) | 5 % TAC + 0,05 % Lup.101 + 0,1 % PADAT-Antioxidans | 86 |
| | ------ | |
| 15) | 5 % TAC + 0,05 % Lup.101 + 0,3 % PADAT-Antioxidans | 83 |
| 16) | 5 % TAC + 0,1 % Lup.101 + 0,2 % TBK-Antioxidans | 85 |
| | ---- | |

Tabelle (Fortsetzung)

| Vernetzungsverstärker, Peroxid, Antioxidans | Vernetzungsgrade (%) |
|---|---|
| 17) 5 % Triallyltrimellitat + 0,05 % Lup.101 + 0,1 % TBK-Antioxidans | 91 |
| 18) 5 % Triallyltrimellitat + 0,05 % Lup.101 + 0,1 % PADAT-Antioxidans | 88 |
| 19) 5 % Triallyltrimellitat + 0,1 % Lup.101 + 0,2 % PADAT-Antioxidans | 90 |
| 20) 5 % Maleinsäure + 0,05 % Lup.101 + 0,1 % TBK-Antioxidans | 0,1 |
| 21) 5 % Maleinsäure + 0,05 % Lup.101 + 0,1 % PADAT-Antioxidans | 0,1 |

Beispiel 4

Polypropylen-Pulver mit einem Schmelzindex von 0,6 g/10 min bei 230 °C und 2,16 kp Belastung wurde mittels unterschiedlichen Mengen (= 1 bis 10 %) des Vernetzungsverstärkers Triallyltrimellitat unter Mitwirkung von 0,05 % bzw. 0,1 % des Peroxids 2,5-Bis-(t-butylperoxy)-2,5-dimethylhexan (= Lup.101) für 40 Minuten bei 200 °C unter Stickstoff vernetzt.

Dieses Beispiel zeigt, daß

a) die optimale Menge an Vernetzungsverstärker bei 3 %-5 % liegt,

b) mit zunehmender Menge an Vernetzungsverstärker der Vernetzungsgrad schlechter wird,

c) auch bei zunehmender Menge an Peroxid (bei Steigerung von 0,05 % auf 0,1 %) der maximale Vernetzungsgrad abnimmt.

| Lup.101 (%) + Triallyltrimellitat (%) | Vernetzungsgrad (%) |
|---|---|
| ohne Zusätze | 0,1 |
| (A) 0,05 + 1 | 0,1 |
| 0,05 + 2 | 0,1 |
| 0,05 + 3 | 91 |
| 0,05 + 4 | 91 |
| 0,05 + 5 | 90 |
| 0,05 + 6 | 88 |
| 0,05 + 7 | 88 |
| 0,05 + 8 | 79 |
| 0,05 + 9 | 75 |
| 0,05 + 10 | 74 |
| (B) 0,1 + 1 | 1 |
| 0,1 + ~~1~~ 2 | 11 |
| 0,1 + 3 | 86 |
| 0,1 + 4 | 80 |
| 0,1 + 5 | 78 |
| 0,1 + 10 | 78 |

Beispiel 5

Polypropylen-Pulver mit einem Schmelzindex von 0,6 g/10 min bei 230 °C und 2,16 kp Belastung wurde mittels 5 % Triallyltrimellitat als Vernetzungsverstärker unter Mitwirkung sehr kleiner Mengen verschiedener Peroxide und Peroxidgemische, deren Mengen 0,05 % 2,5-Bis-(t-butylperoxy)-2,5-di-

methylhexan (= Lup.101) äquivalent sind, für 40 Minuten bei 200 °C in Abwesenheit und in Anwesenheit von 0,1 % des Antioxidans o,o'-Di-t-butyl-p-kresol (= TBK-Antioxidans) unter Stickstoff vernetzt.

Dieses Beispiel zeigt, daß

a) auch andere Peroxide Vernetzungsgrade geben, die denen mit Lup.101 erzielten vergleichbar sind, und dies in An- oder Abwesenheit des Antioxidans,

b) Gemische aus zwei oder drei Peroxiden ebenfalls Vernetzungsgrade geben, die denen mit Lup.101 erzielten vergleichbar sind, und zwar in An- oder Abwesenheit des Antioxidans.

| Vernetzungsverstärker, Peroxid | Vernetzungsgrade (%) mit 0,1 % TBK-Antioxidans | ohne Antioxidans |
|---|---|---|
| a) ohne Zusätze | - | 0 |
| b) mit 0,1 % TBK-Antioxidans | 0 | - |
| ------- | | |
| c) 0,05 % 2,5-Bis-(t-butylperoxy)-2,5-dimethylhexan (= Lup.101) + 5 % Triallyltrimellitat | 86 | 87 |
| d) 0,05 % 2,5-Bis-(t-butylperoxy)-2,5-dimethylhexin(3) (= Lup.130) + 5 % Triallyltrimellitat | 88 | 91 |
| e) 0,059 % α,α'-Bis-(t-butylperoxy)-m-diisopropylbenzol + 5 % Triallyltrimellitat | 78 | 85 |
| f) 0,077 % t-Butyl-m/p-methylcumylperoxid (= D-803) + 5 % Triallyltrimellitat | 87 | 88 |
| g) 0,093 % Ducumylperoxid + 5 % Triallyltrimellitat | 85 | 86 |
| h) 0,085 % O,O-t-Butylperoxy-O-(2-äthylhexyl)-monoperoxycarbonat + 5 % Triallyltrimellitat | 71 | 72 |
| ------- | | |
| i) 0,025 % Lup.101 + 0,025 % Lup.130 + 5 % Triallyltrimellitat | 88 | 87 |
| j) 0,025 % Lup.101 + 0,046 % Dicumylperoxid + 5 % Triallyltrimellitat | 82 | 86 |
| k) 0,017 % Lup.101 + 0,017 % Lup.130 + 0,026 % D-803 + 5 % Triallyltrimellitat | 90 | 90 |

Beispiel 6

Polypropylen-Pulver mit einem Schmelzindex von 0,6 g/10 min bei 230 °C und 2,16 kp Belastung wurde mittels fünf verschiedenen Vernetzungsverstärkern unter Mitwirkung von 0,05 % des Peroxids 2,5-Bis-(t-butylperoxy)-2,5-dimethylhexan (= Lup.101) in Gegenwart der drei Füllstoffe Calciumcarbonat, Talkum bzw. Ruß sowie in Abwesenheit von Füllstoffen für 40 Minuten bei 200 °C bei Anwesenheit von 0,1 % o,o'-Di-t-butyl-p-kresol (= TBK-Antioxidans) unter Stickstoff vernetzt.

Dieses Beispiel zeigt, daß

a) Füllstoffe den Vernetzungsgrad nur geringfügig beeinflussen,

b) das in den vorhergehenden Beispielen noch nicht verwendete Triallylphosphat hohe Vernetzungsgrade gibt, und

c) auch das bifunktionelle m-Phenylenbismaleinimid als Vernetzungsverstärker für das erfindungsgemäße Verfahren geeignet ist.

(Siehe Tabelle Seite 9 f.)

| Vernetzungsverstärker, Peroxid, Antioxidans | Vernetzungsgrade (%) | | | |
|---|---|---|---|---|
| | ohne Füllstoff | in Gegenwart der Füllstoffe 20 % $CaCO_3$ | 20 % Talkum | 3 % Ruß |
| a) ganz ohne Zusätze | 3 | - | - | - |
| b) ohne Zusätze aber mit Füllstoff | - | 0,6 | 0,2 | 0,7 |
| c) 5 % Triallylcyanurat (= TAC) + 0,05 % Lup.101 + 0,1 % TBK-Antioxidans | 87 | 86 | 75 | 73 |
| d) 5 % Trimethylolpropantrimethacrylat (= TRIM) + 0,05 % Lup.101 + 0,1 % TBK-Antioxidans | 87 | 86 | 77 | 86 |
| e) 5 % Triallyltrimellitat + 0,05 % Lup.101 + 0,1 % TBK-Antioxidans | 89 | 91 | 90 | 84 |
| f) 5 % Triallylphosphat + 0,05 % Lup.101 + 0,1 % TBK-Antioxidans | 94 | 85 | 85 | 84 |
| g) 5 % m-Phenylenbismaleinimid + 0,5 % Lup.101 + 0,1 % TBK-Antioxidans | 79 | 78 | 82 | 76 |

Beispiel 7

Polypropylen-Pulver mit einem Schmelzindex von 0,6 g/10 min bei 230 °C und 2,16 kp Belastung wurde mittels verschiedener Agentien für 40 Minuten bei 200 °C unter Stickstoff vernetzt.

Dieses gemischte Beispiel zeigt, daß

a) Polybutandienöl keine Vernetzungsverstärkerfunktion ausübt, andererseits aber die Wirkung eines Vernetzungsverstärkers (Triallyltrimellitat) nicht beeinträchtigt und deshalb zusätzlich zum Vernetzungsverstärker eine Plastifikatorfunktion übernehmen kann,

b) das Verschäumungsmittel Azodicarbonamid die Vernetzung nicht stört,

c) die Vernetzung in Gegenwart von 0,6 % Antioxidans praktisch ebenso gut gelingt wie mit 0,1 bis 0,3 % Antioxidans, insbesondere bei Verwendung von 0,1 % Peroxid,

d) die Vernetzung auch mit einer Kombination aus zwei Vernetzungsverstärkern gelingt, und daß Diallylglutarat eine Plastifikatorfunktion übernehmen kann.

e) auch gewisse andere bifunktionelle Vernetzungsverstärker eine gute Vernetzung zu bewirken vermögen.

| Agentien | Vernetzungsgrade (%) |
|---|---|
| (A) mit Polybutadienöl | |
| a) 5 % 1,2-Polybutadienöl | 0 |
| b) 5 % Triallyltrimellitat | 0 |
| c) 0,05 % 2,5-Bis-(t-butylperoxy)-2,5-dimethylhexan (= Lup.101) | 0 |
| ------- | |
| d) 5 % 1,2-Polybutadienöl + 0,05 % Lup.101 | 2 |
| e) 5 % Triallyltrimellitat + C,05 % Lup.101 | 87 |
| f) 5 % Triallyltrimellitat + 5 % 1,2-Polybutadienöl + 0,05 % Lup.101 | 86 |

Tabelle (Fortsetzung)

| Agentien | Vernetzungsgrade (%) | |
|---|---|---|
| (B) mit Azodicarbonamid als Verschäumungsmittel | | |
| a) 3 % Azodicarbonamid | 0 | |
| ------- | | |
| b) 5 % Triallyltrimellitat + 3 % Azodicarbonamid | 0 | |
| c) 5 % Triallyltrimellitat + 0,05 % Lup.101 | 87 | |
| d) 5 % Triallyltrimellitat + 3 % Azodicarbonamid + 0,05 % Lup.101 | 80 | |
| (C) mit 0,6 % Antioxidantien | | |
| a) 5 % Triallyltrimellitat + 0,05 % Lup.101 + 0,6 % o,o'-Di-t-butyl-p-kresol (= TBK-Antioxidans) | 72 | |
| b) 5 % Triallyltrimellitat + 0,05 % Lup.101 + 0,6 % 2-(p-Phenylamino-anilino)-4,6-diallyl-s-triazin (= PADAT-Antioxidans) | 87 | |
| c) 5 % Triallyltrimellitat + 0,1 % Lup.101 + 0,6 % TBK-Antioxidans | 87 | |
| d) 5 % Triallyltrimellitat + 0,1 % Lup.101 + 0,6 % PADAT-Antioxidans | 85 | |
| (D) mit Gemischen aus zwei Vernetzungsverstärkern | | |
| | mit 0,1 % TBK-Antioxidans | ohne Antioxidans |
| a) 4 % Triallyltrimellitat | 0 | 0 |
| b) 3 % Diallylglutarat | 0 | 0 |
| c) 3 % Triallylcyanurat | 0 | 0 |
| ------- | | |
| d) 4 % Triallyltrimellitat + 0,05 % Lup.101 | 90 | 89 |
| e) 4 % Triallyltrimellitat + 3 % Diallylglutarat + 0,05 % Lup.101 | 76 | 88 |
| f) 4 % Triallyltrimellitat + 3 % Triallylcyanurat + 0,05 % Lup.101 | 90 | 91 |
| (E) mit bifunktionellen Vernetzungsverstärkern | | |
| | mit 0,1 % TBK-Antioxidans | ohne Antioxidans |
| a) 5 % m-Phenylenbismaleinimid | 3 | 5 |
| b) 5 % Äthylenglykoldimethacrylat | 0 | 0 |
| ------- | | |
| c) 5 % m-Phenylenbismaleinimid + 0,05 % Lup.101 | 86 | 76 |
| d) 5 % Äthylenglykoldimethacrylat + 0,05 % Lup.101 | 74 | 84 |

Beispiel 8

Polypropylen-Pulver mit einem Schmelzindex von 0,6 g/10 min bei 230 °C und 2,16 kp Belastung wurde (A) mittels 5 % Triallyltrimellitat + verschiedenen Mengen Lup.101 (0,01 % bis 1 %) für 40 Minuten bei 200 °C, (B) mittels 5 % Triallyltrimellitat + 0,05 % Lup.101 für 40 Minuten bei verschiedenen Temperaturen (160 °C bis 250 °C), (C) mittels 5 % Maleinsäureanhydrid + 0,05 % Lup.101 für 40 Minuten bei 200 °C, (D) mittels 5 % Triallylcyanurat bzw. 5 % Triallyltrimellitat + 0,1 % Cumolhydroperoxid für 40 Minuten bei 200 °C und (E) mittels 5 % Triallyltrimellitat + 0,05 % Lup. 101 für verschiedene Zeiten bei 200 °C unter Stickstoff vernetzt bzw. zu vernetzen versucht.

Dieses gemischte Beispiel zeigt, daß

a) das Optimum der Vernetzung bei 0,08 % Lup. 101 liegt,

b) die Vernetzung (bei 40-minütiger Dauer) erst bei 170 °C einsetzt, bei 220 °C bereits keine Vernetzung mehr erfolgt und das Temperaturoptimum bei 200 °C liegt,

c) Maleinsäureanhydrid im Rahmen der Erfindung keine Vernetzungsverstärkerfunktion ausübt,

d) Cumolhydroperoxid im Rahmen der Erfindung die Rolle des Radikale bildenden Vernetzungsinitiators nicht zu übernehmen in der Lage ist,

e) die Vernetzung bei 200 °C bereits nach 5 Minuten einen beträchtlichen Wert erreicht hat und in der industriellen Praxis eine Vernetzungszeit von 10 Minuten ausreichen würde.

| Vernetzungsverstärker, Peroxid | Vernetzungsgrade (%) |
|---|---|
| (A) mit 5 % Triallyltrimellitat + verschiedenen Mengen 2,5-Bis-(t-butylperoxy)-2,5-dimethylhexan (= Lup. 101) | |
| 0,01 % Lup. 101 | 0 |
| 0,02 % Lup. 101 | 1 |
| 0,03 % Lup. 101 | 13 |
| 0,04 % Lup. 101 | 77 |
| 0,05 % Lup. 101 | 88 |
| 0,06 % Lup. 101 | 90 |
| 0,08 % Lup. 101 | 92 |
| 0,1 % Lup. 101 | 87 |
| 0,15 % Lup. 101 | 85 |
| 0,2 % Lup. 101 | 84 |
| 0,25 % Lup. 101 | 82 |
| 0,3 % Lup. 101 | 80 |
| 0,4 % Lup. 101 | 79 |
| 0,5 % Lup. 101 | 78 |
| 0,6 % Lup. 101 | 76 |
| 0,8 % Lup. 101 | 73 |
| 1 % Lup. 101 | 65 |
| (B) verschiedene Vernetzungstemperaturen: (5 % Triallyltrimellitat + 0,05 % Lup.101) | |
| 160 °C | 13 |
| 170 °C | 31 |
| 180 °C | 73 |
| 190 °C | 74 |
| 200 °C | 89 |
| 210 °C | 53 |
| 220 °C | 1 |
| 230 °C | 0,7 |
| 240 °C | 0,7 |
| 250 °C | 0,7 |

Tabelle (Fortsetzung)

| Vernetzungsverstärker, Peroxid | Vernetzungsgrade (%) |
|---|---|
| (C) Mit 5 % Maleinsäureanhydrid | |
| a) 5 % Maleinsäureanhydrid + 0,05 % Lup.101 | 0 |
| b) 5 % Maleinsäureanhydrid + 0,1 % Lup.101 | 0 |
| c) 5 % Maleinsäureanhydrid + 0,2 % Lup.101 | 0 |
| (D) Mit 0,1 % Cumolhydroperoxid | |
| a) 5 % Triallylcyanurat (= TAC) + 0,1 % Cumolhydroperoxid | 6 |
| b) 5 % Triallyltrimellitat + 0,1 % Cumolhydroperoxid | 12 |
| (E) Verschiedene Vernetzungszeiten: (5 % Triallyltrimellitat + 0,05 % Lup.101) | |
| 5 min | 60 |
| 10 min | 82 |
| 15 min | 84 |
| 20 min | 84 |
| 25 min | 86 |
| 30 min | 87 |
| 35 min | 88 |
| 40 min | 89 |
| 50 min | 87 |
| 60 min | 87 |

## Patentansprüche

1. Verfahren zur Vernetzung und gegebenenfalls Verschäumung von Polypropylen und analogen gesättigten Polymeren mit alternierenden tertiären Kohlenstoffatomen sowie deren Mischungen, die keine Glasfasern enthalten, unter Verwendung von Vernetzungsverstärkern mit wenigstens zwei aktiven (= polymerisierbaren) C-C-Doppel- oder C-C-Dreifachbindungen, ausgenommen Elastomere mit 1,3-Dien-Einheiten, gegebenenfalls in Anwesenheit von insgesamt 1 bis 20 Gew.-% eines oder mehrerer Verschäumungsmittel, dadurch gekennzeichnet, dass die Vernetzung bei vollständiger oder überwiegender Abwesenheit von Sauerstoff mit insgesamt 2,0 bis 15 Gew.-% Vernetzungsverstärker und insgesamt 0,02 bis 0,2 Gew.-% mindestens eines organischen Peroxids, ausgenommen Hydroperoxide, Persäuren und Ketonperoxide, bei Temperaturen von 160 °C bis 210 °C erfolgt, wobei sich die Prozentangaben auf das Gewicht des zu vernetzenden Polymeren beziehen.

2. Verfahren nach Anspruch 1, dadurch gekennzeichnet, daß die Vernetzung in Anwesenheit von Antioxidantien erfolgt.

3. Verfahren nach Anspruch 2, dadurch gekennzeichnet, daß als Antioxidans 2-(p-Phenylaminoanilino)-4,6-diallyloxy-s-triazin verwendet wird.

4. Verfahren nach Anspruch 1 bis 3, dadurch gekennzeichnet, daß die Vernetzung in Anwesenheit von Füllstoffen erfolgt.

5. Verfahren nach Anspruch 1 bis 4, dadurch gekennzeichnet, daß die Vernetzung in Anwesenheit von 1 bis 20 Gew.-% eines oder mehrerer Homo- oder Ccpolymerer erfolgt.

6. Verfahren nach Anspruch 1 bis 5, dadurch gekennzeichnet, daß Vernetzungsverstärker und/oder organische Peroxide in Form eines Masterbatch eingesetzt werden.

## Claims

1. A process for crosslinking and optionally foaming polypropylene and analogous saturated

polymers having alternating tertiary carbon atoms, and mixtures thereof containing no glass fibers, with the use of crosslinkage promoters having at least two active (= polymerizable) C-C double or C-C triple bonds, with the exception of elastomers containing 1,3-diene units, optionally in the presence of altogether 1 to 20 % by weight of one or more foaming agents, characterized in that the crosslinkage takes place in the complete or substantial absence of oxygen with altogether 2.0 to 15 % by weight of crosslinkage promoter and altogether 0.02 to 0.2% by weight of at least one organic peroxide, with the exception of hydroperoxides, peracids, and ketone peroxides, at temperatures of 160 °C to 210 °C, the percentage values being by weight of the polymer to be crosslinked.

2. Process according to claim 1, characterized in that the crosslinkage takes place in the presence of antioxidants.

3. Process according to claim 2, characterized in that 2-(p-phenylaminoanilino)-4,6-diallyloxy-s-triazine is used as antioxidant.

4. Process according to claims 1 to 3, characterized in that the crosslinkage takes place in the presence of fillers.

5. Process according to claims 1 to 4, characterized in that the crosslinkage takes place in the presence of 1 to 20 % by weight of one or more homopolymers or copolymers.

6. Process according to claims 1 to 5, characterized in that crosslinkage promoter and/or organic peroxides are used in the form of a master batch.

**Revendications**

1. Procédé de réticulation et, le cas échéant, de transformation en mousse de polypropylène et de polymères saturés analogues présentant des atomes de carbone tertiaires alternés, ainsi que de leurs mélanges, qui ne contiennent pas de fibres de verre, en utilisant des renforçateurs de réticulation présentant au moins deux doubles liaisons ou triples liaisons actives (= polymérisables) carbone-à-carbone, excepté des élastomères présentant des motifs, 1,3-diéniques, éventuellement en présence d'une proportion totale de 1 à 20 % en poids d'un ou plusieurs agents moussants, caractérisé en ce que la réticulation est effectuée en l'absence totale ou essentielle d'oxygène avec au total 2,0 à 15 % en poids de renforçateur de réticulation et au total 0,02 à 0,2 % en poids d'au moins un peroxyde organique, excepté des hydroperoxydes, des peracides et des peroxydes de cétones, à des températures de 160 à 210 °C, les indications de pourcentages se rapportant au poids du polymère à réticuler.

2. Procédé suivant la revendication 1, caractérisé en ce que la réticulation est conduite en présence d'anti-oxydants.

3. Procédé suivant la revendication 2, caractérisé en ce qu'on utilise comme anti-oxydant la 2-(p-phénylaminoanilino)-4,6-diallyloxy-s-triazine.

4. Procédé suivant les revendications 1 à 3, caractérisé en ce que la réticulation est conduite en présence de charges.

5. Procédé suivant les revendications 1 à 4, caractérisé en ce que la réticulation est conduite en présence de 1 à 20 % en poids d'un ou plusieurs homopolymères ou copolymères.

6. Procédé suivant les revendications 1 à 5, caractérisé en ce qu'on utilise des renforçateurs de réticulation et/ou des peroxydes organiques sous forme d'un mélange-maître.